# EUROPEAN PATENT APPLICATION

(11) **EP 4 716 209 A1**
(43) Date of publication of application: **25.03.2026**
(21) Application number: 25203900.3
(22) Date of filing: 23.09.2025
(51) Int. Cl.: H04N 7/18, G08B 13/196

(54) **VIDEO MANAGEMENT SYSTEM WITH AUTOMATED CAMERA COMMISSIONING AND LOAD BALANCING**

(30) Priority: 23.09.2024 US 202463697972 P; 19.09.2025 US 202519334545
(71) Applicant: Tyco Fire & Security GmbH, 8212 Neuhausen am Rheinfall (CH)
(72) Inventor: VASQUEZ, Alexander Galman, 8212 Neuhausen am Rheinfall (CH); SONG, Yingsheng, 8212 Neuhausen am Rheinfall (CH); LAWRENCE, Peter, 8212 Neuhausen am Rheinfall (CH); SANTHOSHKUMAR, Rejani, 8212 Neuhausen am Rheinfall (CH); NEILL, Terence, 8212 Neuhausen am Rheinfall (CH); MILLAR, Esther Elizabeth, 8212 Neuhausen am Rheinfall (CH)
(74) Representative: Meissner Bolte Nürnberg

(57) **Abstract**

The present disclosure relates to a Video Management System with automated camera commissioning and load balancing that comprises a processing circuit to discover a camera based on a broadcast message transmitted by the camera. Further, a load estimate pertaining to each of a network video recorder (NVR) from a set of NVRs is determined and the camera is assigned to an NVR from the set of NVRs based on the load estimate. The camera is then configured using predefined configuration settings.

## Description

### CROSS-REFERENCE TO RELATED APPLICATION

This patent application claims the benefit of U.S. Non-Provisional Patent Application No. 19/334,545, filed on September 19, 2025, titled "VIDEO MANAGEMENT SYSTEM WITH AUTOMATED CAMERA COMMISSIONING AND LOAD BALANCING", which claims the benefit of U.S. Provisional Application No. 63/697,972, filed on September 23, 2024, titled "VIDEO MANAGEMENT SYSTEM WITH AUTOMATED CAMERA COMMISSIONING AND LOAD BALANCING." The disclosure of the prior applications are hereby incorporated by reference in their entirety.

### TECHNICAL FIELD

The present disclosure relates generally to video management systems (VMS), and more particularly, to systems and methods for automated commissioning of a cameras and load balancing among network video recorders (NVRs) in a VMS environment.

### BACKGROUND

Generally, a video management system (VMS) include numerous cameras and multiple network video recorders (NVR). When commissioning a camera, a user is typically required to manually configure each individual camera and connect it to the VMS, which can be time-consuming and labor-intensive. This manual effort increases proportionally with the number of cameras that must be configured during onboarding. Manual configuration processes are prone cameras to human error, which can result in rework and inefficient system management.

Additional challenges include device discovery as cybersecurity enhancements - such as closed ports and disabled protocols - make device discovery more difficult. After discovery, each camera must be manually configured before it can begin streaming and become visible on the system. Other challenges include network configuration and NVR assignment. Furthermore, manual assignment of cameras to NVR's can result in some NVR's being overloaded with others having spare capacity.

There is therefore a need to provide a system and method for automated commissioning of cameras and load balancing amongst NVRs.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later.

In one aspect, the present disclosure provides a video management system (VMS) comprises a processing circuit to automatically discover a camera based on a broadcast message transmitted by the camera, assign the camera to a network video recorder (NVR) selected from a set of NVRs, and configure the camera using predefined configuration settings. The predefined configuration settings may include user- or customer-specified parameters, and may be retrieved from local or remote storage, third-party software, or determined using artificial intelligence or machine learning models.

In another aspect, the present disclosure provides a video management system (VMS) comprises a processing circuit configured to receive a request to add a camera, determine a load estimate for each network video recorder (NVR) in a set of NVRs, and assign the camera to an NVR based on the load estimate. The load estimate may be periodically generated by each NVR and may be compared to a threshold to facilitate optimal load distribution and prevent overloading of any NVR.

In yet another aspect, the present disclosure provides a video management system (VMS) comprises a processing circuit configured to discover a camera based on a broadcast message, determine a load estimate, and configure the camera using predefined configuration settings. The processing circuit may further be configured to automatically reassign the camera to another NVR in response to a failure event, and to store video feed locally on the camera during reassignment to prevent data loss.

In a further aspect, the present disclosure provides a method for automated camera commissioning and load balancing, comprising discovering, by a processing circuit, a load estimate pertaining for each of network video recorder (NVR) in a set of NVRs; assigning, by the processing circuit, the camera to an NVR based on the load estimate; and configuring, by the processing circuit, the camera using predefined configuration settings. The method may further include generating a notification to a user regarding the commissioning status of the camera.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.
FIG. 1 is a perspective view schematic drawing of a building with a security system, in accordance with various aspects of the present disclosure.
FIG. 2 is a block diagram of building security systems for multiple buildings communicating with a cloud-based security system, in accordance with various aspects of the present disclosure.
Fig. 3 is a diagram of a Video Management System, in accordance with various aspects of the present disclosure.
Figs 4-5 are flowcharts illustrating a method for automated camera commissioning and load balancing, in accordance with various aspects of the present disclosure.

### DETAILED DESCRIPTION

Various aspects are now described with reference to the drawings. In the following description, for purposes of explanation, numerous specific details are set forth in order to provide a thorough understanding of one or more aspects. It may be evident, however, that such aspect(s) may be practiced without these specific details.

In conventional video management systems, onboarding new cameras typically requires manual intervention at multiple stages. An installer or administrator would need to individually locate each camera on the network, configure network and video settings, and manually assign the camera to a network video recorder (NVR). This process was not only time-consuming and labor-intensive, especially in large-scale deployments, but also prone to human error. Furthermore, manual assignment of cameras to NVRs often resulted in uneven distribution of processing loads, with some NVRs becoming overloaded while others remained underutilized, leading to inefficiencies and potential system instability.

To address one or more of these issues, the present disclosure includes a video management system (VMS) that automates the commissioning and configuration of cameras within a surveillance environment. The VMS includes a processing circuit, memory, and communication interface that collectively enables the system to discover new cameras on the network. When a camera is powered on and transmits a broadcast message, the device discovery module within the VMS detects the camera and initiates the onboarding process.

This approach introduces significant advancements over previous systems by its ability to assign each discovered camera to a network video recorder (NVR) based on real-time load estimates. The load estimating module queries each NVR for its current capacity and determines the optimal assignment to ensure balanced resource utilization across the system. This automated load balancing prevents overloading of individual NVRs and enhances the reliability and scalability of the surveillance infrastructure.

Once a camera is assigned to an NVR, the configuring module automatically applies predefined configuration settings to the camera. These settings, which may include video quality, security parameters, and network information, can be pre-selected by the user or determined using artificial intelligence or machine learning models. The configuration process is streamlined and consistent, reducing manual intervention and minimizing the risk of human error.

The system further provides user notifications upon successful commissioning of cameras. By integrating automated discovery, intelligent assignment, and configuration, the system significantly reduces the time and effort required to deploy and manage large-scale video surveillance systems, while ensuring optimal performance and ease of use.

### Building Security System

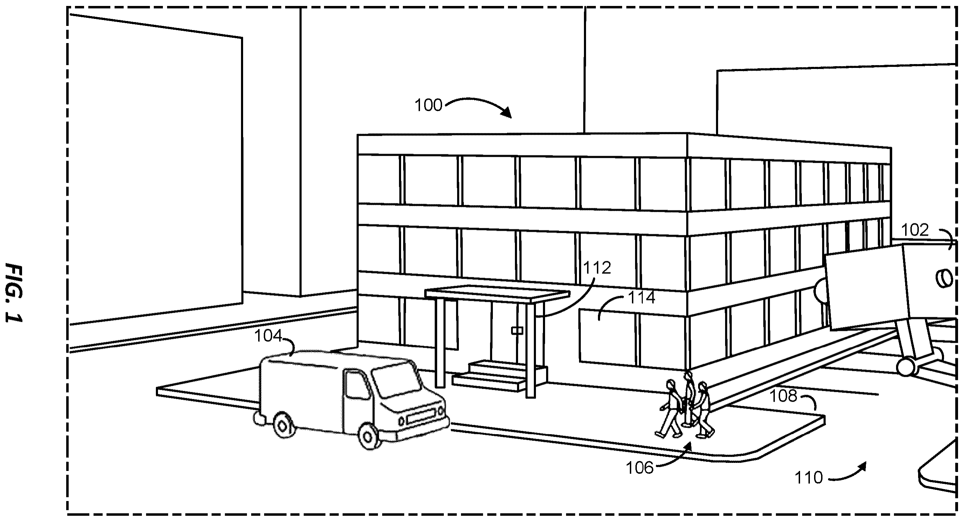

Referring now to FIG. 1, a building 100 with external surveillance such as a security camera 102 and a parking lot 110 is shown, according to an aspect. The building 100 shown is a multi-story commercial building surrounded by, or near, the parking lot 110 but can be any type of building in some aspects, such as a shed, residential home, garage, commercial building, industrial building, special purpose building, or other building or structure. As further examples, the building 100 may be a school, a hospital, a store, a place of business, a residence, a hotel, an office building, an apartment complex, etc. The building 100 can be public or private. The building 100 can be associated with the parking lot 110.

In the aspect shown, both the building 100 and the parking lot 110 are at least partially in the field of view of the security camera 102. In some aspects, multiple security cameras 102 may be configured to capture views of the exterior of the entire building 100 and/or parking lot 110 not in (or in to create multiple angles of overlapping or the same field of view) the field of view of a single security camera 102. The parking lot 110 can be used by one or more vehicles 104 where the vehicles 104 can be either stationary or moving (e.g. busses, cars, trucks, delivery vehicles, motorcycles, scooters, bicycles, hovercraft, drones, autonomous vehicles, and/or other manned and/or unmanned vehicles). The building 100 and parking lot 110 can be further used by one or more pedestrians 106 and/or pets who can traverse the parking lot 110 and/or enter and/or exit the building 100. The building 100 may be further surrounded, or partially surrounded, by a sidewalk 108 to facilitate the foot traffic of one or more pedestrians 106, facilitate deliveries, etc. In other aspects, the building 100 may be one of many buildings belonging to a single industrial park, shopping mall, or commercial park having a common parking lot and security camera 102. In another aspect, the building 100 may be a residential building or multiple residential buildings that share a common roadway and/or parking lot.

The building 100 is shown to include a door 112 and multiple windows 114. An access control system can be implemented within or otherwise associated with the building 100 to secure these potential entrance or egress ways of the building 100. For example, one or more badge readers can be positioned outside and/or within general proximity to the door 112 and can be configured to restrict access to the building 100. The pedestrians 106 can each be associated with one or more access badges that they can utilize with the access control system to gain access to the building 100 through the door 112. Furthermore, other interior doors within the building 100 can include and/or be associated with one or more access readers. In some aspects, the exterior and/or interior doors are secured via one or more security systems using biometric information, e.g., facial recognition, iris recognition, fingerprint scanners, voice recognition, or other biometric information. The access control system can generate and/or record events, e.g., an indication that a particular user or particular badge has interacted with a particular door. Furthermore, if one or more doors such as the door 112 is forced open, broken, or otherwise tampered with, the access control system, via door sensor, can detect the event and record, for example, a door forced open (DFO) event.

The windows 114 can be secured and/or monitored by the access control system via one or more burglar alarm sensors. These sensors can be configured to measure vibrations associated with the window 114. If vibration patterns or levels of vibrations are sensed by the sensors of the window 114, a burglar alarm can be generated by the access control system for the window 114. Alternatively or additionally, these sensors can be configured to sense a state of a window 114, such as open or closed, for a window 114 that is configured to be opened and closed by a user.

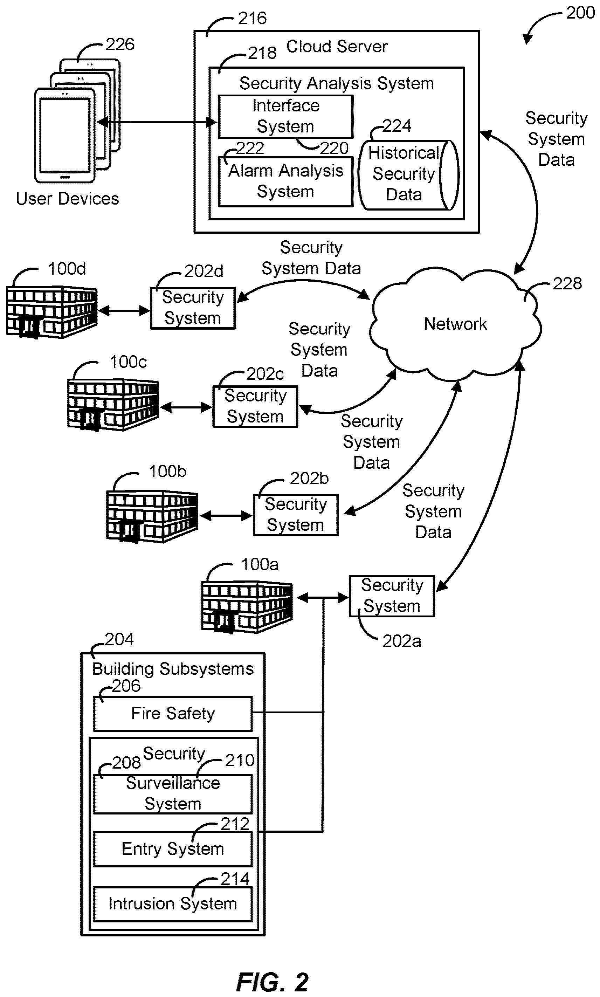

Referring now to FIG. 2, a security system 200 is shown for multiple buildings, according to an exemplary aspect. The security system 200 is shown to include buildings 100a-100d. Each of buildings 100a-100d is shown to be associated with a security system 202a-202d (e.g., a subsystem or individualized system for a particular building). The buildings 100a-100d may be the same as and/or similar to building 100 as described with reference to FIG. 1. The security systems 202a-202d may be one or more controllers, servers, and/or computers located in a security panel or part of a central computing system for a building.

The security systems 202a-202d may communicate with, or include, various security sensors and/or actuators, building subsystems 204. For example, subsystems and/or sensors can include fire safety subsystems 206, which may include one or more various smoke sensors and alarm devices, carbon monoxide sensors, alarm devices, or other fire safety subsystem components and/or devices. Security subsystems 208 are shown in the example aspect to include a surveillance system 210, an entry system 212, and an intrusion system 214. The surveillance system 210 may include various video cameras, still image cameras, and image and/or video processing systems for monitoring various rooms, hallways, parking lots, the exterior of a building, the roof of the building, or other locations of the associated building. The entry system 212 can include one or more systems configured to allow users to enter and exit the building (e.g., door sensors, turnstiles, gated entries, badge systems, or other access systems.) The intrusion system 214 may include one or more sensors configured to identify whether an intrusion has occurred, such as if a window or door has been forced open. The intrusion system 214 can include one or more keypad modules for arming and/or disarming a security system and various motion sensors (e.g., infrared (IR), passive IR (PIR), acoustic sensors, or other motion sensors) configured to detect motion in various zones of the building 100a.

Each of buildings 100a-100d may be located in various locations such as towns, cities, states, and/or countries across the world. There may be any number of buildings 100a-100d that can be associated by a particular organization, such as a company, association, government, military, or other organization. The buildings 100a-100d may be owned and operated by one or more entities. For example, a grocery store entity may own and operate buildings 100a-100d in a particular geographic state. The security systems 202a-202d may record data from one or more of the building subsystems 204 and communicate collected security system data to the cloud server 216 via network 228, where it may be stored, accessed, or otherwise used.

In some aspects, the network 228 communicatively couples the devices, systems, and servers of the system 200. In some aspects, the network 228 is at least one of and/or a combination of a wired and/or wireless network, such as a Wi-Fi network, a wired Ethernet network, a ZigBee network, a Bluetooth network, and/or any other wired and/or wireless network. The network 228 may be a local area network and/or a wide area network (e.g., the Internet, a building WAN, etc.) and may use a variety of communications protocols (e.g., BACnet, IP, LON, etc.). The network 228 may include routers, modems, and/or network switches. The network 228 may be a combination of wired and wireless networks.

The cloud server 216 is shown in the example aspect to include a security analysis system 218 that receives the security system data from the security systems 202a-202d of the buildings 100a-100d. The cloud server 216 may include one or more processing circuits (e.g., memory devices, processors, databases, and/or other circuits and/or components) configured to perform the various functionalities described herein. The cloud server 216 may be a private server and/or hosted on a private server. In some aspects, the cloud server 216 is implemented by a cloud system, examples of which include Amazon WEB SERVICES^{®} (AWS) and MICROSOFT AZURE^{®}.

A processing circuit of the cloud server 216 can include one or more processors and memory devices. The one or more processors can be a general purpose or specific purpose processor, an application specific integrated circuit (ASIC), one or more field programmable gate arrays (FPGAs), a group of processing components, or other suitable processing components. The processor may be configured to execute computer code and/or instructions stored in a memory or received from other computer readable media (e.g., CDROM, network storage, a remote server, or other computer readable media).

The memory can be non-transitory and include one or more devices (e.g., memory units, memory devices, storage devices, and/or other devices) for storing data and/or computer code for completing and/or facilitating the various processes described in the present disclosure. The memory can include random access memory (RAM), read-only memory (ROM), hard drive storage, temporary storage, non-volatile memory, flash memory, optical memory, or any other suitable memory for storing software objects and/or computer instructions. The memory can include database components, object code components, script components, or any other type of information structure for supporting the various activities and information structures described in the present disclosure. The memory can be communicably connected to the processor via the processing circuit and can include computer code for executing (e.g., by the processor) one or more processes described herein.

In some aspects, the cloud server 216 can be wholly or partially located on premises within one of the buildings 100a-100d. For example, a user may wish that their security, fire, or HVAC data remain confidential and have a lower risk of being compromised. In such an instance, the cloud server 216 may be located on-premises instead of within or at an off-premises cloud platform.

The security analysis system 218 may implement an interface system 220, an alarm analysis system 222, and a database storing historical security data 224, security system data collected from the security systems 202a-202d. The interface system 220 may provide various interfaces of user devices 226 for monitoring and/or controlling the security systems 202a-202d of the buildings 100a-100d. The interfaces may include various maps, alarm information, maintenance ordering systems, and/or other interfaces. The historical security data 224 can be aggregated security alarm and/or event data collected via the network 228 from the buildings 100a-100d. The alarm analysis system 222 can be configured to analyze the aggregated data to identify insights, detect alarms, reduce false alarms, and/or other desirable or useful information. Analysis can be performed according to instructions stored in memory and executed by one or more processors. For example, one or more algorithms, artificial intelligence (AI) and/or machine learning (ML) can be used to analyze data and/or otherwise glean information. The analysis results of the alarm analysis system 222 can be provided to a user via the interface system 220. In some aspects, the results of the analysis performed by the alarm analysis system 222 are provided as inputs such as one or more control actions to the security systems 202a-202d via the network 228.

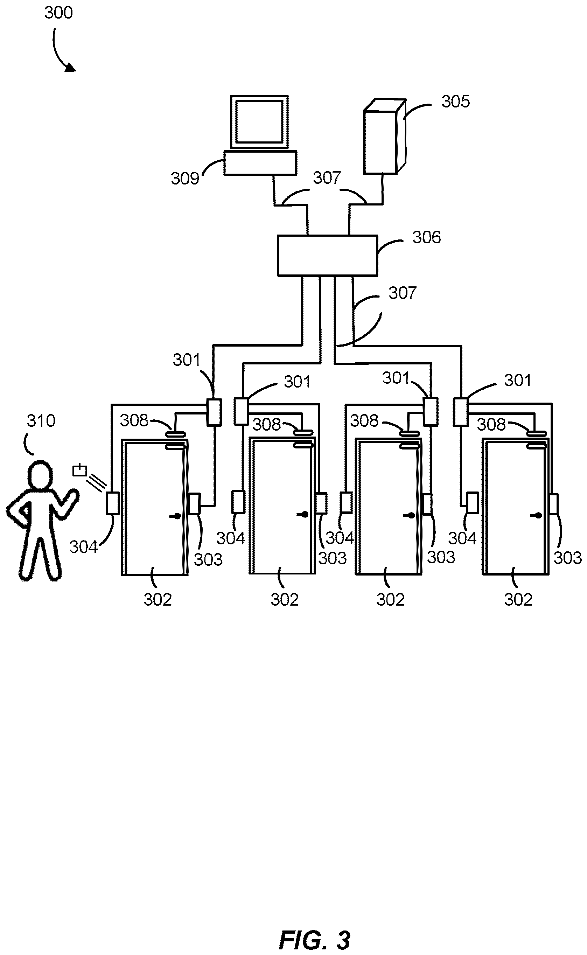

Referring now to FIG. 3, a video management system (VMS) 300 is shown, in accordance with exemplary aspects of the present disclosure.

In some aspects, the VMS 300 may be part of the surveillance system 210 (referred above in FIG.2). The VMS 300 may include a communication interface 302 and a processing circuit 304. The communication interface 302 may include wired and/or wireless interfaces (e.g., jacks, antennas, transmitters, receivers, transceivers, wire terminals, etc.) for conducting data communications with various systems, devices, and/or networks. For example, the communication interface 302 may include an Ethernet card and port for sending and receiving data via an Ethernet-based communications network and/or a Wi-Fi transceiver for communicating via a wireless communications network. Communication interface 302 may be configured to communicate via local area networks or wide area networks (e.g., the Internet, a building WAN, etc.) and may use a variety of communication protocols (e.g., BACnet, IP, LON, etc.). The communication interface 302 may further support any suitable current or future communication protocol, including but not limited to cellular, Bluetooth, Zigbee, or proprietary protocols.

Communication interface 302 may include one or more network interfaces configured to facilitate electronic data communications between the VMS 300 and various external systems or devices (e.g., user interfaces 326 etc.).

The processing circuit 304 is may include a processor 306 and a memory 308. The processor 306 may be a general purpose or specific purpose processor, an application specific integrated circuit (ASIC), one or more field programmable gate arrays (FPGAs), a group of processing components, or other suitable processing components. The processor 306 may be configured to execute computer code or instructions stored in memory 308 or received from other computer readable media (e.g., CDROM, network storage, a remote server, etc.). The processor 306 may be operatively coupled with one or more modules, including but not limited to device discovery, load estimating, assigning, configuring, and notifying modules, as described herein.

The memory 308 may include one or more devices (e.g., memory units, memory devices, storage devices, etc.) for storing data and/or computer code for completing and/or facilitating the various processes described in the present disclosure. The memory 308 may include random access memory (RAM), read-only memory (ROM), hard drive storage, temporary storage, non-volatile memory, flash memory, optical memory, or any other suitable memory for storing software objects and/or computer instructions. The memory 308 may include database components, object code components, script components, or any other type of information structure for supporting various activities and information structures described in the present disclosure. The memory 308 may be communicably connected with the processor 306 via the processing circuit 304 and may include computer code for executing (e.g., by processor 306) one or more processes described herein. The memory 308 may further store configuration settings, load estimates, user profiles, camera profiles, and historical data associated with system operation.

The VMS 300 is shown to include a database 320. Although, FIG. 3 depicts database 320 as part of the VMS 300, it is to be understood that the database 320 may be implemented locally, remotely, in a distributed manner, or in any combination thereof, including cloud-based storage.

Still referring to FIG. 3, the VMS 300 is shown to be in communication with the user interface 326 typically, via the communication interface 302. In an aspect, the user interface 326 may be implemented using an electronic device associated with a user that can be selected from, but not limited to, wearable devices (e.g., optical head mounted display, smartwatch, etc.), smart phones and/or mobile devices, desktop, computer, laptop and netbook computing devices, tablet computing devices, digital media devices, personal digital assistant (PDA) and any other device having communication capabilities and/or processing capabilities. In some aspects, the user interface 326 may be associated with a user such as an admin of the security system 200 (referred above in FIG. 2), security agency, a customer of the VMS 300 etc. The user interface 326 may provide notifications, configuration options, system status, and other interactive features to users, administrators, or third-party service providers.

Further, the VMS 300 is shown to include a device discovery module 310. The device discovery module 310 may be configured to discover one or more cameras 322 to be added to the VMS 300. A customer may connect and power on one or more cameras 322. Further, the cameras 322 may broadcast a message that helps in discovery of the camera 322 by the device discovery module 310. In some aspects, the broadcast message may comprise one or more details pertaining to the camera 322 such as a camera name, a camera IP address, a camera model, customer identifier, customer name, site name, location, etc. Further, the device discovery module 310 may notify a load estimating module 312 about the discovery of the camera 322 and in some aspects, transmit the broadcast message containing the details of the camera 322 to the load estimating module 312. The device discovery module 310 may further be configured to authenticate discovered cameras, handle security protocols, and manage error conditions such as duplicate device detection or communication failures.

Subsequent to receiving the notification pertaining to the discovery of the camera 322 and/or the broadcast message, the load estimating module 312 may be configured to determine one or more load estimates or other performance metrics for each of the NVRs or other system components from the set of NVRs 324. In some aspects, the load estimating module 312 may periodically query the NVRs 324 for the load estimate. In other aspects, the load estimating module 312 may query the NVRs 324 for the load estimate subsequent to discovery of a camera 322 to be commissioned.

In one exemplary aspect, one or more NVRs 324 may be configured to calculate and periodically broadcast their load estimate. The broadcasting of load estimate by one or more NVRs 324 may be based on a request generated by the processing circuit 304 of the VMS 300. The system may further include error handling routines for cases where an NVR fails to respond or provides an invalid load estimate, including retry mechanisms or default assignments.

In some aspects, the load estimate may indicate one or more metrics, such as total resolution per second, bandwidth usage, CPU utilization, storage capacity, or other relevant parameters, compared to a predefined or dynamically determined maximum value.. The predefined maximum value may be automatically set by the VMS 300 or manually set by a user and further stored into the database 320. Further, the load estimating module 312 may provide information on load estimates pertaining to each of the NVR's 324 to an assigning module 314.

The assigning module 314 may be configured to compare the load estimates pertaining to each of the NVRs 324 with a threshold level. In some aspects, the threshold level may be automatically set by the VMS 300 and stored in the database 320. In other aspects, the threshold level may be manually set by a user such as an admin of the VMS 300 and stored into the database 320. Further, the assigning module 314 may be configured to assign the camera 322 discovered by the device discovery module 310 to an NVR from the set of NVRs 324 having a load estimate below the threshold level. In this way, the assigning module 314 ensures that none of the NVRs 324 are overloaded, thus maintaining overall load balance in the VMS 300. If all NVRs are above the threshold, the assigning module 314 may implement alternative assignment strategies, such as selecting the NVR with the lowest load, queuing the camera for later assignment, or notifying the user of insufficient capacity.

In some aspects, the assigning module 314 may automatically assign the camera 322 to another NVR in case of a failure event subject to the load estimate of the NVR. The failure event may indicate one or more of power failure, network failure, NVR failure etc. During re-assignment of the camera 322 to another NVR, the video feed may be stored on camera 322 to ensure there is no loss of video feed. The video feed may be stored locally on camera 322, in a buffer or local storage, for a duration sufficient to cover the reassignment period, and may be automatically uploaded to the assigned NVR once the connection is re-established.

In some aspects, the assigning module 314 may automatically assign the camera 322 to an NVR from the set of NVRs 324 based on one or more predefined or dynamically generated rules, which may consider factors such as camera location, priority, user preferences, or other system parameters irrespective of load estimate of the NVRs 324.

Further, configuring module 316 may communicate with the assigning module 314 to obtain information on assignment of the camera 322 to one of the NVRs 324. Subsequent to the assignment, the configuring module 316 may configure the camera 322 using predefined configuration settings. In some aspects, the predefined configuration settings may be automatically set and stored into the database 320 by the VMS 300. In other aspects, the predefined configuration settings may be manually defined by an admin of the VMS 300 and stored into the database 320.

In an aspect, the predefined configuration settings may indicate loading pre-selected or dynamically generated configuration settings associated with a user, customer, or system profile. For example, the customer may pre-select configuration settings for the first camera to be deployed and such configuration settings are mapped and stored in the database 320 against the customer's profile. For any subsequent camera deployments by the customer, the VMS 300 will fetch the pre-selected configuration settings stored in the database 320 and utilize the same for configuration.

In some aspects, the configuration settings may include settings such as a username, a password, a camera security level, video settings for the camera 322 based on the camera type. For example, the video settings may comprise a stream quality level, video format, resolution, bandwidth, an amount of frames to capture per second, environment modes (e.g., outdoor, indoor, night, gaming, etc.), motion sensitivity, video compression, maximum zoom level. In some aspects, the configuration settings may include NVR settings as per the NVR type assigned to the camera for example, a host identifier, Subnet, DNS, Gateway or any other parameter relevant to camera or NVR operation, now known or later developed.

In some aspects, the configuring module 316 may utilize a software stored in the database 320 for fetching the predefined configuration settings. In other aspects, the configuring module 316 may utilize a third-party software for fetching the predefined configuration settings.

In other aspects, the configuring module 316 may utilize an AI/ML based model that would determine configuration settings for the camera 322 based on camera type and the assigned NVR 324 to the camera 322 through continuous learning. Subsequent to configuration, the camera 322 may be visible on the VMS 300 and ready for streaming. The AI/ML model may be trained using historical configuration data, user preferences, and system performance metrics, and may be updated periodically or in real time as new data becomes available.

Further, a notifying module 318 may generate one or more notifications or other system events, such as errors, warnings, or status updates for a customer via the user interface 326 to notify about the commissioning of the camera 322.

Such techniques offered by the VMS 300 facilitates automated commissioning of multiple cameras along with load balancing, thereby reducing the manual effort and time spent by the customer in setting up individual cameras.

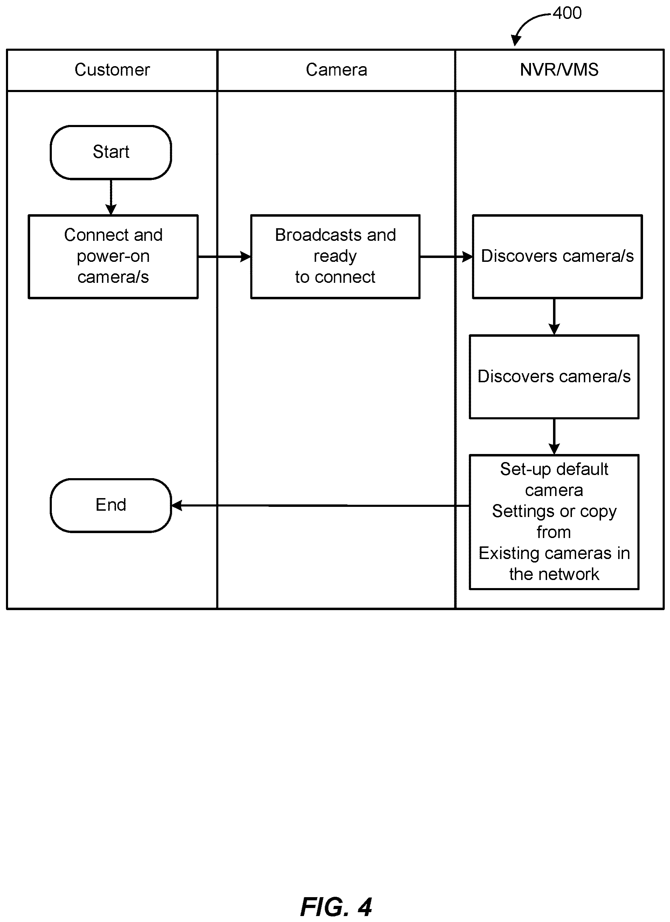

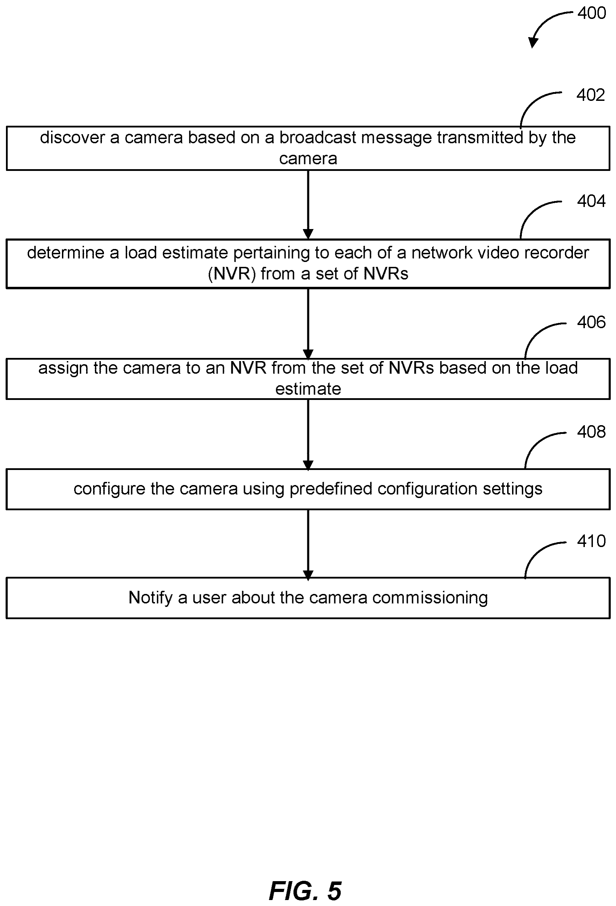

Now referring to FIGs 4-5, flowcharts of a method 400 for automated camera commissioning and load balancing is shown in accordance with exemplary aspects of the present disclosure. The steps described herein may be performed in any suitable order, and one or more steps may be performed concurrently or iteratively as required by system operation. In some aspects, method 400 is performed by processing circuit 304 of FIG.3. Alternatively, the method 400 may be partially or completely performed by another computing system or controller of the VMS 300.

The 400 method is shown to include discovering one or more cameras 322 to be added to the VMS 300 (Step 402). A customer may connect and power on camera 322 (as shown in FIG. 4). Further, the camera 322 may broadcast a message that helps in the discovery of the camera 322. In some aspects, the broadcast message may comprise one or more details pertaining to the camera 322 such as a camera name, a camera IP address, a camera model, customer identifier, customer name, site name, location, etc. In some aspects, the one or more cameras 322 may be discovered by the device discovery module 310 (referred above in FIG.3).

The method 400 is further shown to include determining a load estimate pertaining to each of the NVRs from the set of NVRs 324 (Step 404). In some aspects, the NVRs 324 may be periodically queried for load estimate by the load estimating module 312 (referred above in FIG.3). In other aspects, the NVRs 324 may be queried for the load estimate subsequent to discovery of a camera 322 to be commissioned.

In one exemplary aspect, one or more NVRs 324 may be configured to calculate and periodically broadcast their load estimate. The broadcasting of load estimate by one or more NVRs 324 may be based on a request generated by the processing circuit 304 of the VMS 300.

In some aspects, the load estimate may indicate Total Resolution per Second (configured) vs predefined maximum. The predefined maximum value may be automatically set by the VMS 300 or manually set by an admin and further stored into the database 320.

The method 400 is further shown to include assigning the camera 322 to an NVR from the set of NVRs 324 based on the load estimate (Step 406). For example, the load estimates pertaining to each of the NVRs 324 may be compared with a threshold level. In some aspects, the threshold level may be automatically set by the VMS 300 and stored in the database 320. In other aspects, the threshold level may be manually set by a user such as an admin of the VMS 300 and stored into the database 320. Further, the camera 322 may be assigned to an NVR from the set of NVRs 324 having a load estimate below the threshold level. In some aspects, the camera 322 may be assigned to the NVR 324 having the load estimate below the threshold level by the assigning module 314 (referred above in FIG.3) to ensure load balancing amongst NVRs 324.

In some aspects, the camera 322 may be automatically assigned to another NVR in case of a failure event subject to the load estimates of the NVRs. The failure event may indicate one or more of power failure, network failure, NVR failure etc. During re-assignment of the camera 322 to another NVR, the video feed may be stored on camera 322 to ensure there is no loss of video feed.

In some aspects, method 400 may comprise automatically assigning the camera 322 to an NVR from the set of NVRs 324 based on predefined rules irrespective of load estimate of the NVRs 324.

The method 400 is further shown to include configuring the camera 322 using predefined configuration settings (Step 408). In some aspects, the camera 322 may be configured by the configuring module 316 (referred above in FIG. 3). In some aspects, the predefined configuration settings may be automatically set and stored into the database 320 by the VMS 300. In other aspects, the predefined configuration settings may be manually defined by a user such as an admin of the VMS 300 and stored into the database 320.

In an aspect, the predefined configuration settings may indicate loading pre-selected configuration settings by the customer. For example, the customer may pre-select configuration settings for the first camera to be deployed and such configuration settings are mapped and stored in the database 320 against the customer's profile. For any subsequent camera deployments by the customer, the VMS 300 will fetch the pre-selected configuration settings stored in the database 320 and utilize the same for configuration.

In some aspects, the configuration settings may include settings such as a username, a password, a camera security level, video settings for the camera 322 based on the camera type. For example, the video settings may comprise a stream quality level, video format, resolution, bandwidth, amount of frames to capture per second, environment modes (e.g., outdoor, indoor, night, gaming, etc.), motion sensitivity, video compression, maximum zoom level. In some aspects, the configuration settings may include NVR settings as per the NVR 324 assigned to the camera 322 for example, a host identifier, Subnet, DNS, Gateway.

In some aspects, the predefined configuration settings may be fetched by using software stored in the database 320. In other aspects, the predefined configuration settings may be fetched by using a third-party software.

In other aspects, the predefined configuration settings may be fetched by using an AI/ML based model that would determine configuration settings for the camera 322 based on camera type and the assigned NVR type to the camera 322 through continuous learning.

Method 400 is further shown to include generating one or more notifications for a customer to notify about the commissioning of the camera 322 (Step 410). In some aspects, the notifications may be generated by the notifying module 318 (referred above in FIG. 3) via the user interface 326.

The present disclosure may be implemented according to one or any combination of the following clauses.

Clause 1. A video management system (VMS) comprising at least one processing circuit configured to: discover a camera based on a broadcast message transmitted by the camera; assign the camera to a network video recorder (NVR) selected from a set of NVRs; and configure the camera using predefined configuration settings.

Clause 2. The system of clause 1, wherein the predefined configuration settings comprise pre-selected configuration settings specified by a user or customer.

Clause 3. The system of any previous clause, wherein the processing circuit is further configured to store a mapping of the pre-selected configuration settings to a customer profile.

Clause 4. The system of clause 1, wherein the processing circuit is configured to fetch the predefined configuration settings using an artificial intelligence or machine learning (AI/ML) model.

Clause 5. The system of clause 1, wherein the processing circuit is configured to fetch the predefined configuration settings from software stored in the VMS.

Clause 6. The system of clause 1, wherein the processing circuit is configured to fetch the predefined configuration settings using a third-party software application.

Clause 7. The system of clause 1, further comprising a user interface configured to notify a user upon successful commissioning of the camera.

Clause 8. The system of clause1, wherein the predefined configuration settings comprise at least one of: a username, a password, a camera security level, a video stream quality level, a video format, a resolution, a bandwidth, a frame rate, an environment mode, a motion sensitivity, a video compression setting, or a maximum zoom level.

Clause 9. The system of clause 1, wherein the processing circuit is further configured to apply a set of predefined rules to assign the camera to an NVR, irrespective of the load estimate.

Clause 10. A video management system (VMS) comprises: a processing circuit configured to: receive a request to add a camera; determine a load estimate for each network video recorder (NVR) in a set of NVRs; and assign the camera to an NVR from the set of NVRs based on the load estimate.

Clause 11. The system of claim 10, wherein the processing circuit is configured to assign the camera to an NVR having a load estimate below a threshold level.

Clause 12. The system of clause 10, wherein each NVR is configured to periodically generate a load estimate.

Clause 13. The system of clause 10, wherein the processing circuit is further configured to automatically assign the camera to another NVR in response to a failure event, subject to the load estimate of the NVR.

Clause 14. The system of any previous clause, wherein the failure event comprises at least one of a power failure, network failure, or NVR failure.

Clause 15. The system of clause 10, wherein the load estimate comprises a total resolution per second value compared to a predefined maximum value.

Clause 16. The system of claim 10, wherein the processing circuit is further configured to store video feed locally on the camera during reassignment to prevent loss of video data.

Clause 17. A video management system (VMS) comprises a processing circuit configured to: discover a camera based on a broadcast message transmitted by the camera; determine a load estimate for each network video recorder (NVR) in a set of NVRs; assign the camera to an NVR from the set of NVRs based on the load estimate; and configure the camera using predefined configuration settings.

Clause 18. A method for automated camera commissioning and load balancing, the method comprising: discovering, by a processing circuit, a camera based on a broadcast message transmitted by the camera; determining, by the processing circuit, a load estimate for each network video recorder (NVR) in a set of NVRs; assigning, by the processing circuit, the camera to an NVR from the set of NVRs based on the load estimate; and configuring, by the processing circuit, the camera using predefined configuration settings

Clause 19. The method of clause 18, further comprising generating, by the processing circuit, a notification to a user regarding the commissioning status of the camera.

Clause 20. The method of claim 18, wherein configuring the camera comprises retrieving configuration settings from a database associated with a customer profile.

Aspects of this disclosure are described herein with reference to block diagrams and flowchart illustrations of processor-implemented methods, systems, devices, apparatuses, and computer program products. It can be understood that each block of the block diagrams and flowchart illustrations, and combinations of blocks in the block diagrams and flowchart illustrations, respectively, can be implemented by processor-accessible instructions. Such instructions may include, for example, computer program instructions (e.g., processor-readable and/or processor-executable instructions). The processor-accessible instructions may be built (e.g., linked and compiled) and retained in processor-executable form in one or multiple memory devices or one or many other processor-accessible non-transitory storage media. These computer program instructions also can be stored in a processor-readable memory, where in response to execution by one or more processors, individually or in combination, the computer program instructions can direct a computer, a computing device, or other programmable data processing apparatus to function in a particular manner, such that the instructions stored in the processor-readable memory produce an article of manufacture including processor-accessible instructions (e.g., processor-readable instructions and/or processor executable instructions) to implement the function specified in the flowchart blocks (individually or in a particular combination) or blocks in block diagrams (individually or in a particular combination). The computer program instructions can be loaded onto a computer, a computing device, or other programmable data processing apparatus to cause a series of operations to be performed on the computer or other programmable apparatus to produce a computer-implemented process. The series of operations may be performed in response to execution by one or more processors or other types of processing circuitry. Thus, such instructions that execute on the computer or other programmable apparatus provide operations for implementing the functions specified in the flowchart blocks (individually or in a particular combination) or blocks in block diagrams (individually or in a particular combination).

In some implementations, the processor-accessible instructions may be loaded or otherwise incorporated into a general-purpose computer, a special purpose computer, or another programmable information processing apparatus to produce a particular machine, such that the operations or functions specified in flowchart blocks or other blocks presented in this disclosure can be implemented in response to execution at the computer or processing apparatus. More specifically, the loaded processor-accessible instructions may be accessed and executed by one or multiple processors, individually or in combination, or other types of processing circuitry. In response to execution, the loaded processor-accessible instructions provide the functionality described in connection with flowchart blocks (individually or in a particular combination) or blocks in block diagrams (individually or in a particular combination). Thus, such instructions which are executed on a computer, a computing device, or other programmable data processing apparatus can create a means for implementing the functions specified in the flowchart blocks (individually or in a particular combination) or blocks in block diagrams (individually or in a particular combination).

As used in this disclosure, including the annexed drawings, in some aspects the terms "component," "module," "interface," "system," and the like are intended to refer to a computer-related entity or an entity related to an apparatus with one or more specific functionalities. The entity can be either hardware, a combination of hardware and software, software, or software in execution. One or more of such entities are also referred to as "functional elements." As an example, a component can be a process running on a processor, a processor, an object, an executable, a thread of execution, a program, and/or a computer. For example, both an application running on a server or network controller, and the server or network controller can be a component. One or more components can reside within a process and/or thread of execution and a component can be localized on one computer and/or distributed between two or more computers. Also, these components can be executed from various computer readable media having various data structures stored thereon. The components can communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which parts can be controlled or otherwise operated by program code executed by a processor. Yet another example, a component can be an apparatus that provides specific functionality through electronic components without mechanical parts, the electronic components can include a processor to execute program code that provides, at least partially, the functionality of the electronic components. As another example, interface(s) can include I/O components or Application Programming Interface (API) components. While the foregoing examples are directed to aspects of a component, the exemplified aspects or features also apply to a system, module, and similar.

Unless otherwise expressly stated, it is in no way intended that any protocol, procedure, process, functionality or combination of functionalities, or method set forth herein be construed as requiring that its acts or steps be performed in a specific order. Accordingly, where a process or method claim does not actually recite an order to be followed by its acts or steps or it is not otherwise specifically recited in the claims or descriptions of the subject disclosure that the steps are to be limited to a specific order, it is in no way intended that an order be inferred, in any respect. This holds for any possible non-express basis for interpretation, including matters of logic with respect to the arrangement of steps or operational flow; plain meaning derived from grammatical organization or punctuation; the number or type of aspects described in the specification or annexed drawings; or the like.

As used in this disclosure, including the annexed drawings, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in this specification and annexed drawings should be construed to mean "one or more" unless specified otherwise or clear from context to be directed to a singular form.

In addition, the terms "example" and "such as" are utilized herein to mean serving as an instance or illustration. Any aspect or design described herein as an "example" or referred to in connection with a "such as" clause is not necessarily to be construed as preferred or advantageous over other aspects or designs described herein. Rather, use of the terms "example" or "such as" is intended to present concepts in a concrete fashion. The terms "first," "second," "third," and so forth, as used in the claims and description, unless otherwise clear by context, is for clarity only and doesn't necessarily indicate or imply any order in time or space.

The term "processor," as utilized in this disclosure, refers to any computing processing unit or device comprising processing circuitry that can operate on data and/or signaling. A computing processing unit or device may include, for example, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor may include an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. A processor may also be implemented as a combination of computing processing units.

In addition, terms such as "store," "data store," data storage," "database," and substantially any other information storage component relevant to operation and functionality of a component, refer to "memory components," or entities embodied in a "memory" or components comprising the memory. It will be appreciated that the memory components described herein can be either volatile memory or nonvolatile memory or can include both volatile and nonvolatile memory. Moreover, a memory component can be removable or affixed to a functional element (e.g., device, server).

Simply as an illustration, nonvolatile memory can include read only memory (ROM), programmable ROM (PROM), electrically programmable ROM (EPROM), electrically erasable ROM (EEPROM), or flash memory. Volatile memory can include random access memory (RAM), which acts as external cache memory. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ES-DRAM), Synchlink DRAM (SLDRAM), and direct Rambus RAM (DRRAM). Additionally, the disclosed memory components of systems or methods herein are intended to comprise, without being limited to comprising, these and any other suitable types of memory.

Various aspects described herein can be implemented as a method, system, device, apparatus, or article of manufacture using standard programming and/or engineering techniques. In addition, various of the aspects disclosed herein also can be implemented by means of program modules or other types of computer program instructions stored in memory device and executed by a processor, or other combination of hardware and software, or hardware and firmware. Such program modules or computer program instructions can be loaded onto a general-purpose computer, a special purpose computer, or another type of programmable data processing apparatus to produce a machine, such that the instructions which execute on the computer or other programmable data processing apparatus create a means for implementing the functionality of disclosed herein.

The term "article of manufacture" as used herein is intended to encompass a computer program accessible from any computer-readable device, carrier, or media. For example, computer readable media can include but are not limited to magnetic storage devices (e.g., hard drive disk, floppy disk, magnetic strips, or similar), optical discs (e.g., compact disc (CD), digital versatile disc (DVD), blu-ray disc (BD), or similar), smart cards, and flash memory devices (e.g., card, stick, key drive, or similar).

While the foregoing disclosure discusses illustrative aspects and/or aspects, it should be noted that various changes and modifications could be made herein without departing from the scope of the described aspects and/or aspects as defined by the appended claims. Furthermore, although elements of the described aspects and/or aspects may be described or claimed in the singular, the plural is contemplated unless limitation to the singular is explicitly stated. Additionally, all or a portion of any aspect and/or aspect may be utilized with all or a portion of any other aspect and/or aspect, unless stated otherwise.

## Claims

1. A video management system (VMS) comprising: at least one processing circuit configured to: discover a camera based on a broadcast message transmitted by the camera; assign the camera to a network video recorder (NVR) selected from a set of NVRs; and configure the camera using predefined configuration settings.

2. The system according to claim 1, wherein the predefined configuration settings comprise pre-selected configuration settings specified by a user or customer; or wherein the processing circuit is further configured to store a mapping of the pre-selected configuration settings to a customer profile.

3. The system according to any of the preceding claims, wherein the processing circuit is configured to fetch the predefined configuration settings using an artificial intelligence or machine learning (AI/ML) model; or wherein the processing circuit is configured to fetch the predefined configuration settings from software stored in the VMS; or wherein the processing circuit is configured to fetch the predefined configuration settings using a third-party software application.

4. The system according to any of the preceding claims, further comprising a user interface configured to notify a user upon successful commissioning of the camera.

5. The system according to any of the preceding claims, wherein the predefined configuration settings comprise at least one of: a username, a password, a camera security level, a video stream quality level, a video format, a resolution, a bandwidth, a frame rate, an environment mode, a motion sensitivity, a video compression setting, or a maximum zoom level.

6. The system according to any of the preceding claims, wherein the processing circuit is further configured to apply a set of predefined rules to assign the camera to an NVR, irrespective of the load estimate.

7. The system according to any of the preceding claims, wherein the processing circuit is further configured to: receive a request to add a camera; determine a load estimate for each network video recorder (NVR) in a set of NVRs; and assign the camera to an NVR from the set of NVRs based on the load estimate.

8. The system according to any of the preceding claims, wherein the processing circuit is configured to assign the camera to an NVR having a load estimate below a threshold level; or wherein the processing circuit is further configured to automatically assign the camera to another NVR in response to a failure event, subject to the load estimate of the NVR.

9. The system according to any of the preceding claims, wherein each NVR is configured to periodically generate a load estimate.

10. The system according to any of the preceding claims, wherein the failure event comprises at least one of a power failure, network failure, or NVR failure.

11. The system according to any of the preceding claims, wherein the load estimate comprises a total resolution per second value compared to a predefined maximum value.

12. The system according to any of the preceding claims, wherein the processing circuit is further configured to store video feed locally on the camera during reassignment to prevent loss of video data.

13. The system according to any of the preceding claims, wherein the processing circuit is further configured to discover a camera based on a broadcast message transmitted by the camera; determine a load estimate for each network video recorder (NVR) in a set of NVRs; assign the camera to an NVR from the set of NVRs based on the load estimate; and configure the camera using predefined configuration settings.
